# EUROPEAN PATENT SPECIFICATION

(11) **EP 2 456 908 B1**
(45) Date of publication and mention of the grant of the patent: **14.09.2016**
(21) Application number: 10802676.6
(22) Date of filing: 15.07.2010
(51) Int. Cl.: C25D 11/04, C25D 11/06, C25D 11/18, C25D 9/06, C25D 11/02, B23K 35/02, B23K 35/28, B23K 35/36

(54) **METHOD FOR FORMING AN OXIDE LAYER ON A BRAZED ARTICLE**
VERFAHREN ZUR FORMUNG EINER OXIDSCHICHT AUF EINEM GELÖTETEN ARTIKEL
PROCÉDÉ DE FORMATION D'UNE COUCHE D'OXYDE SUR UN ARTICLE BRASÉ

(30) Priority: 23.07.2009 US 227983 P
(43) Date of publication of application: 30.05.2012
(73) Proprietor: Carrier Corporation, Farmington, CT 06034 (US)
(72) Inventor: JAWOROWSKI, Mark R., Glastonbury Connecticut 06033 (US); TARAS, Michael F., Fayetteville New York 13066 (US)
(74) Representative: Taylor, Adam David
(86) International application number: PCT/US2010/042059
(87) International publication number: WO 2011/011251

(56) References cited:
- US-A- 2 514 469
- US-A- 3 259 973
- US-A- 3 951 328
- US-A- 5 190 596
- US-A1- 2002 001 177
- US-A1- 2003 098 145
- US-A1- 2006 110 141
- US-A1- 2007 075 120
- "MILITARY SPECIFICATION ANODIC COATINGS FOR ALUMINUM AND ALUMINUM ALLOYS", , 15 September 2003 (2003-09-15), XP055170777, Retrieved from the Internet: URL:https://www.wbdg.org/ccb/FEDMIL/a8625. pdf [retrieved on 2015-02-19]

## Description

Aluminum and aluminum alloys are known and used in heat exchangers for their relatively high strength, thermal conductivity and formability. For instance, manifolds, fins, and/or tubes of heat exchangers are commonly made from aluminum. However, aluminum can corrode under normal atmospheric conditions. Therefore, a protective coating or paint is often applied to the aluminum to prevent corrosion of the underlying aluminum.

One drawback of using protective coatings and paints is that manufacturing processes used to produce an aluminum component are not always compatible with developing a strong bond between the aluminum and the coatings. For instance, in the manufacture of heat exchangers, a brazing process may be used to bond aluminum fins, tubes and manifolds together using brazing and flux materials. Flux materials are chemical cleaning agents which facilitate brazing and welding by removing oxidation from the metals being joined. Commonly used flux materials can leave a residual oxide glazing on surfaces of the tubes and the fins, which may inhibit bonding between a coating or paint and the aluminum.

One step in some protective treatment processes involves anodizing aluminum surfaces of the heat exchangers. With regard to anodized aluminum it is known to apply anodic coatings to aluminum by making the metal anodic in a suitable solution and with a suitable counter electrode (cathode). The application of an anodic current converts the surface of aluminum to aluminum oxide, which is characteristically hard and wear resistant. The anodic coatings are usually microporous and can be sealed with dyes to obtain desired colors or with other solutions to improve corrosion resistance or to attain desired surface characteristics. Some of the more commonly used solutions for applying anodic coatings on aluminum include sulfuric acid, chromic acid, oxalic acid, sulfophthalic acid, boric acid and their combinations.

US Patent Publication 3,259,973 discloses a flux for brazing strong joints between light metals such as magnesium and aluminium which does not discolour upon anodizing.

The present invention provides a method comprising: applying a brazing flux to an outer surface of an aluminum article; brazing the outer surface of the aluminum article; anodizing the aluminum article to form an oxide layer on the outer surface of the aluminum article by contacting a portion of the outer surface of the aluminum article with an electrolyte solution, and applying an electric current through the electrolyte solution with the aluminum article as anode to react aluminum on the outer surface of the aluminum article to form aluminum oxide, wherein a portion of the oxide layer is formed between a flux residue produced by the brazing and the outer surface of the aluminum article; and removing brazing flux from the outer surface of the aluminum article after forming the oxide layer.

Certain preferred embodiments of the invention will now be described by way of example only and with reference to the accompanying drawings, in which:
FIG. 1 is a front view of an aluminum article.
FIG. 2 is an enlarged view of aluminum article components prior to brazing.
FIG. 3 is an enlarged view of a brazed joint with flux residue.
FIG. 4 is an enlarged view of the brazed joint of FIG. 3 after anodizing.
FIG. 5 is a flow diagram illustrating a method for anodizing a brazed aluminum article.
FIG. 6 is a flow diagram illustrating another method for anodizing a brazed aluminum article.
FIG. 7 is a flow diagram illustrating yet another method for anodizing a brazed aluminum article.

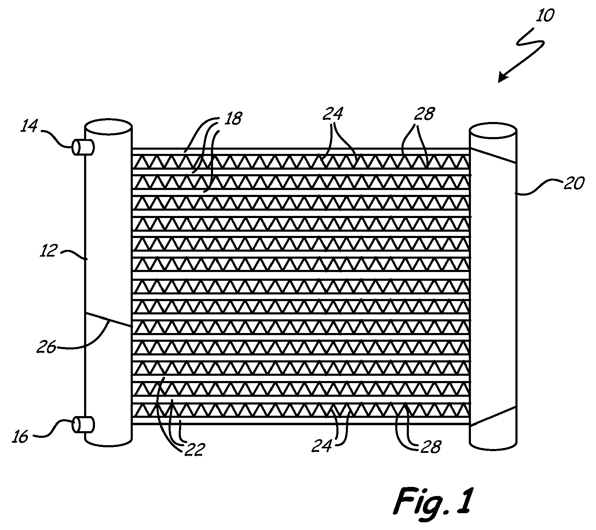

FIG. 1 illustrates one embodiment of aluminum article 10. Aluminum article 10 can be aluminum or an aluminum alloy. Within this disclosure, "aluminum" shall refer to both aluminum and aluminum alloys. In this example, aluminum article 10 is a heat exchanger. However, it is to be understood that this disclosure is also applicable to other types of aluminum articles and is not limited to heat exchangers or the type of heat exchanger shown. While FIG. 1 illustrates a straight (planar) heat exchanger, formed heat exchangers and other parts can also benefit from the method of the invention.

Aluminum article 10 includes first manifold 12 having inlet 14, outlet 16 and partition 26; tubes 18 and 22; second manifold 20, and fins 24. First manifold 12 includes inlet 14 for receiving a working fluid, such as coolant, and outlet 16 for discharging the working fluid. Each of a plurality of tubes 18 is fluidly connected at a first end to first manifold 12 and at an opposite second end to second manifold 20. Each of a plurality of tubes 22 is fluidly connected at a first end to second manifold 20 and at an opposite second end to first manifold 12 to return the working fluid to first manifold 12 for discharge through outlet 16. Partition 26 is located within first manifold 12 to separate inlet and outlet sections of first manifold 12. Tubes 18 and 22 can include channels, such as microchannels, for conveying the working fluid. The two-pass working fluid flow configuration described above is only one of many possible design arrangements. Single and other multi-pass fluid flow configurations can be obtained by placing partitions 26, inlet 14 and outlet 16 at specific locations within first manifold 12 and second manifold 20. The method of the invention is applicable to aluminum articles regardless of fluid flow configuration.

Fins 24 extend between tubes 18 and the tubes 22 as shown in FIG. 1. Fins 24 support tubes 18 and 22 and establish open flow channels between the tubes 18 and 22 (*e.g.,* for airflow) to provide additional heat transfer surfaces. Fins 24 also provide support to the heat exchanger structure. Fins 24 are bonded to tubes 18 and 22 at brazed joints 28. Fins 24 are not limited to the triangular cross-sections shown in FIG. 1. Other fin configurations (*e.g*., rectangular, trapezoidal, oval, sinusoidal) are also suitable.

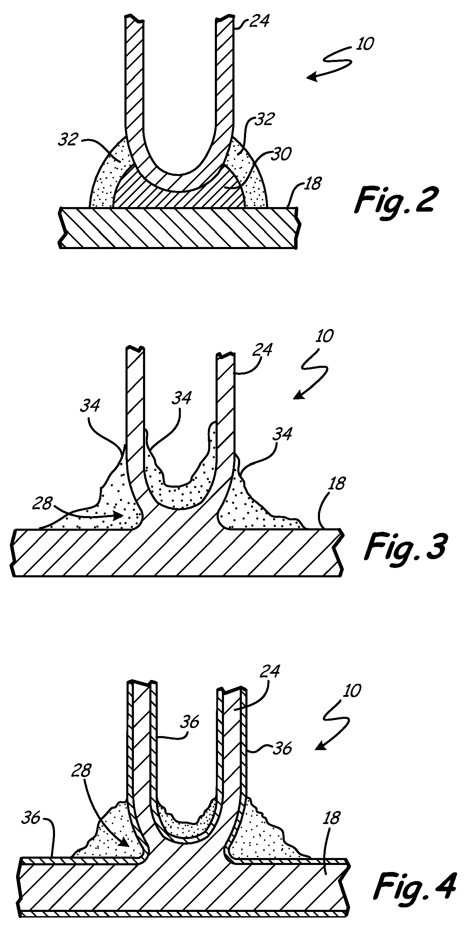

FIG. 2 illustrates one example of fin 24 and tube 18 prior to brazing. Braze material 30 is positioned between fin 24 and tube 18. Braze material 30 is commonly supplied as an alloy cladding on either fin 24 or tube 18. Flux 32 is applied over fin 24, tube 18 and braze material 30 to prevent oxide formation during brazing. In one example, flux 32 includes at least potassium, aluminum and fluorine. The fluorine can comprise a majority of flux 32 by weight. One such flux 32 is Nocolok®, available from Solvay Fluor GmbH (Hannover, Germany). Flux 32 can be applied onto fin 24, tube 18 and braze material 30 as a waterborne slurry or blown on as an electrostatically-deposited powder. Alternatively, a brazing paste containing braze material 30 and flux 32 can be applied between fin 24 and tube 18 or a flux-coated brazing rod can be positioned between fin 24 and tube 18.

Typically, heat is applied to melt braze material 30 and form brazed joint 28 between fin 24 and tube 18. The braze process can be a "controlled atmosphere braze" process conducted under a substantially pure nitrogen atmosphere. At a predetermined brazing temperature, flux 32 interacts with brazing material 30 to melt brazing material 30. Melted brazing material 30 flows between fin 24 and tube 18 and forms a strong bond upon cooling and solidification to form brazed joint 28.

FIG. 3 illustrates an enlarged view of one example of brazed joint 28 of aluminum article 10. Flux 32 can leave a residual fluoro-compound (flux residue 34) on portions of the surfaces of fins 24 and tubes 18 and 22 following the brazing process. Flux residue 34 can include fluorine from flux 32 in combination with other elements from the atmosphere, brazing material 30 or from the aluminum of tubes 18 and 22 or fins 24. For instance, flux residue 34 can include phases of fluoride and/or fluoro-oxy-compounds. The composition of flux residue 34 can vary depending on the composition of flux 32, brazing material 30 and aluminum; the atmosphere, and the brazing process and conditions.

If flux residue 34 is not removed from the surfaces of fins 24 and tubes 18 and 22, flux residue 34 can inhibit strong bonding between a later deposited protective coating or paint and the underlying aluminum of fins 24 and tubes 18 and 22. Flux residue 34 can also contribute to formation of a powdery corrosion product on surfaces of aluminum article 10 that can also inhibit bonding between a later deposited protective coating or paint or produce an undesired visual appearance.

To allow deposition of a subsequent protective coating, flux residue 34 can be removed as described in International Application No. PCT/US09/42552, filed May 1, 2009. Alternatively, anodizing aluminum article 10 according to the present invention reduces bonding between flux residue 34 and the surfaces of aluminum article 10. Anodizing aluminum article 10 also conditions the surfaces of aluminum article 10 to allow for improved adhesion with subsequent coatings.

Anodizing aluminum surfaces is generally known to improve wear resistance and surface hardness. Aluminum anodizing is normally performed on an aluminum surface after the aluminum surface is cleaned. However, Applicants discovered that when aluminum article 10 was anodized before the removal of flux residue 34, an oxide layer formed between the surface of aluminum article 10 and flux residue 34. In order for an oxide layer to form between flux residue 34 and the surface of aluminum article 10, flux residue 34 must be at least somewhat permeable to ionic current. Anodizing aluminum article 10 before removing flux residue 34 provides unexpected benefits.

First, the anodizing step reduces the bond strength between aluminum article 10 and flux residue 34. Because the oxide layer forms underneath flux residue 34 (i.e. between flux residue 34 and the outer surface of aluminum article 10), flux residue 34 does not adhere as strongly to aluminum article 10. Second, the anodizing step improves adhesion between aluminum article 10 and a subsequently applied coating without having to first remove flux residue 34. Thus, not only can anodizing aluminum article 10 be used as a flux residue removal process, but anodizing also improves adhesion between the outer surface of aluminum article 10 and a subsequently applied coating.

FIG. 4 illustrates an enlarged view of brazed joint 28 of aluminum article 10 after it has been anodized according to the present invention. During anodizing, oxide layer 36 forms along outer surfaces of aluminum article 10 (fins 24, tubes 18 and 22, manifolds 12 and 20) including underneath flux residue 34. Oxide layer 36 forms a generally uniform layer on the outer surface of aluminum article 10. Depending on anodizing conditions, oxide layer 36 has a thickness between about 1 micron and about 10 microns. Most preferably, oxide layer 36 has a thickness of about 5 microns.

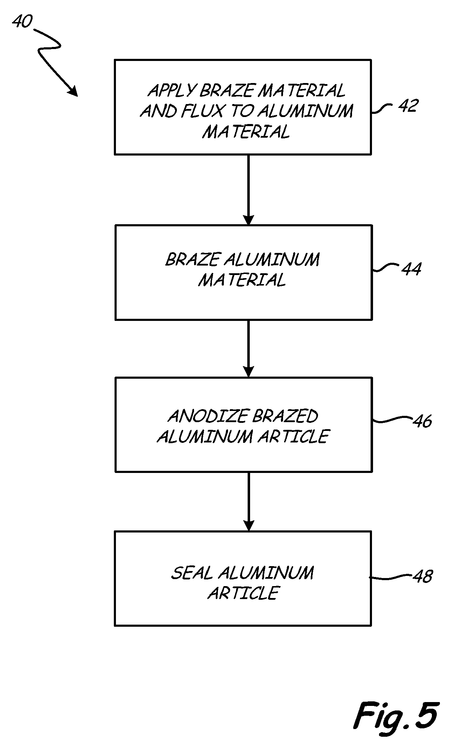

FIG. 5 illustrates one embodiment of a method for forming oxide layer 36 on the outer surface of aluminum article 10. Method 40 includes applying brazing material 30 and flux 32 to aluminum article 10 (step 42), brazing aluminum article 10 (step 44) and anodizing aluminum article 10 (step 46). Method 40 also includes the optional step of sealing aluminum article 10 (step 48). Steps 42 (applying flux) and 44 (brazing) are described above in reference to FIG. 2.

Oxide layer 36 is formed on the outer surface of aluminum article 10 and under flux residue 34 by anodizing aluminum article 10 in step 46. The anodizing process includes contacting or immersing at least a portion of aluminum article 10 in an anodizing (electrolyte) solution contained within a bath, tank or other container. Aluminum article 10 functions as the anode in an electrochemical cell. A second metal article functions as the cathode in the cell. Direct or alternating current is passed through the anodizing solution to anodize aluminum article 10 and form oxide layer 36 under flux residue 34. Pulsed direct current or alternating current is suitable for anodizing aluminum article 10 according to the present invention. When using pulsed current, the average current is preferably not more than 250 volts, more preferably not more than 200 volts, or most preferably not more than 175 volts, depending on the composition of the chosen anodizing solution. The current density is preferably between about 100 amps/m² and about 300 amps/m². The anodizing solution is preferably maintained at a temperature between about 5 °C and about 90 °C during anodizing step 46.

Oxide layer 36 can form on aluminum article 10 and under flux residue 34 in different ways depending on the anodizing method and solution chosen. First, aluminum oxide layer 36 can grow from the base metal of aluminum article 10. Second, oxide layer 36 can grow from the base metal of aluminum article 10 while silicate, phosphate or other compounds are deposited from the anodizing solution to form ceramic oxide layer 36. Third, oxide layer 36 can be formed by deposition of metal ions from the anodizing solution alone. The different ways of forming oxide layer 36 employ different anodizing solutions and methods.

In applications where oxide layer 36 is an aluminum oxide layer grown from the base metal of aluminum article 10 and under flux residue 34, the anodizing solution typically contains an acid. Suitable acids include sulfuric acid, oxalic acid, boric acid, phosphoric acid, chromic acid, and combinations thereof. The acid chosen for the anodizing solution affects the properties of oxide layer 36 including corrosion resistance, hardness and adhesive bond strength and can also affect cost, complexity and environmental impact of the process. The anodizing solution can also contain other compounds to adjust pH and other properties of the anodizing solution and anodizing process. In one embodiment, an aqueous anodizing solution containing sulfuric acid at a concentration of about 165 grams per liter to about 200 grams per liter is used in step 46. The aqueous anodizing solution contains a maximum of about 20 grams of dissolved aluminum ions per liter and a maximum of about 0.2 grams of sodium chloride per liter. With this anodizing solution, the current density is preferably between about 107 amps/m² (10 amps per square foot) and about 162 amps/m² (15 amps per square foot). Using an anodizing solution containing sulfuric acid provides a relatively inexpensive method for forming aluminum oxide layer 36 on aluminum article 10.

In applications where oxide layer 36 is a ceramic oxide layer, step 46 can include anodizing solutions suitable for methods such as the CeraFuse (Whyco Finishing Technologies, LLC, Thomaston, CT) and Keronite (Keronite International Ltd., Cambridge, UK) processes. In the CeraFuse process, a hard, dense ceramic layer of alpha aluminum oxide is formed on aluminum article 10. In Keronite's plasma electrolytic oxidation process, an electric current is passed through a bath of the anodizing solution so that a controlled plasma discharge is formed on the surface of aluminum article 10, fusing oxides on aluminum article 10 into a harder phase. The CeraFuse and Keronite processes both form ceramic oxide layer 36 under flux residue 34 on aluminum article 10.

In applications where oxide layer 36 is formed by deposition of metal ions from the anodizing solution, step 46 can include anodizing solutions suitable for methods such as the Alodine® EC²™ (Henkel Corporation, Madison Heights, MI) process. In the Alodine® EC²™ process, oxide layer 36 is formed through the electro deposition of titanium oxides. The anodizing solution can contain compounds such as titanium dioxide. According to this process, metal ions from the anodizing solution deposit on aluminum article 10 to form oxide layer 36. Since oxide layer 36 is formed only from the metal ions in the anodizing solution, the base metal does not react to form an oxide layer. Oxide layer 36 formed according to this process is dense and has a high adhesion potential. Like the other anodizing steps 46, the Alodine® EC²™ process forms oxide layer 36 under flux residue 34 on aluminum article 10.

The embodiment of method 40 illustrated in FIG. 5 also includes sealing the outer surface of aluminum article 10 (step 48) following anodizing step 46. Sealing step 48 is typically performed for aluminum article 10 in situations where a later paint coating will not be applied. A later applied paint coating adheres better to an unsealed outer surface of aluminum article 10 than to a sealed outer surface. Sealing the outer surface of aluminum article 10 provides additional wear and corrosion resistance. Sealing step 48 can be performed by contacting or immersing the outer surface of aluminum article 10 with nickel acetate or treating the outer surface with boiling water or steam, chromic acid, or ttivalent chromium compounds.

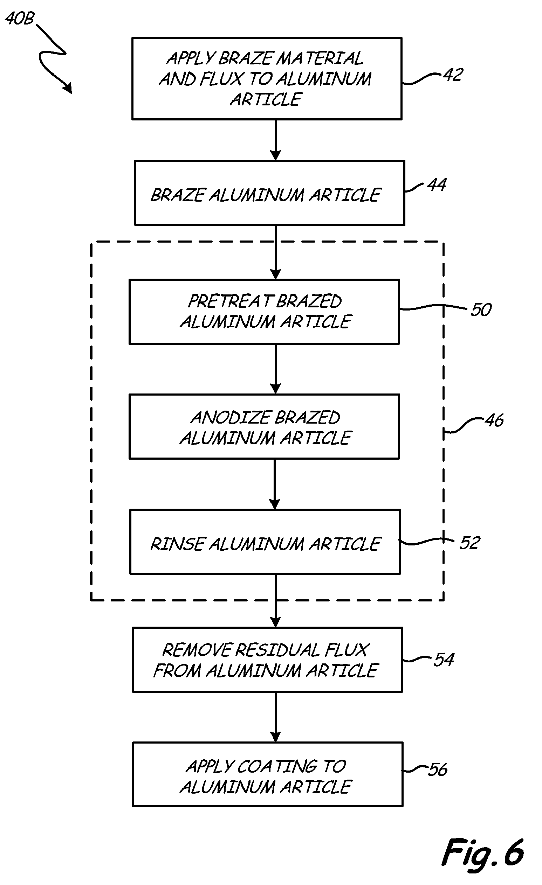

FIG. 6 illustrates another embodiment of a method for forming oxide layer 36 on the outer surface of aluminum article 10. Method 40B includes applying brazing material 30 and flux 32 to aluminum article 10 (step 42), brazing aluminum article 10 (step 44) and anodizing aluminum article 10 (step 46). Anodizing step 46 includes substeps for pretreating aluminum article 10 (substep 50) and rinsing aluminum article 10 (substep 52). Method 40 also includes the optional steps of removing residual flux (flux residue 34) from aluminum article 10 (step 54) and applying a coating to aluminum article 10 (step 56).

Anodizing step 46 includes pretreatment substep 50. Pretreatment substep 50 prepares aluminum article 10 for anodizing and can include alkaline cleaning, alkaline etching, acid desmutting, water rinsing or spraying and combinations of the above. In one pretreatment substep 50, aluminum article 10 is cleaned with a silicate-free alkaline solution at about 54 °C (130 °F). Pretreatment substep 50 can also include water rinsing or spraying using deionized water or tap water to prevent entrapment of any acidic or alkaline solutions used during pretreatment substep 50.

Anodizing step 46 also includes rinsing aluminum article 10 (substep 52). Once oxide layer 36 has formed on aluminum article 10, aluminum article 10 is rinsed with water to remove any residual acids and other chemicals used in anodizing step 46. The water rinse prevents residual acids or chemicals from corroding aluminum article 10 and interfering with any subsequently applied coatings.

The embodiment of method 40B illustrated in FIG. 6 also includes removing residual flux from aluminum article 10 (step 54). Once oxide layer 36 is formed on aluminum article 10 in step 46, flux residue 34 can be removed more easily from aluminum article 10. Flux residue 34 can be removed by rinsing, water spraying or hydrothermal treatment. By anodizing aluminum article 10 and forming oxide layer 36 between the outer surface of aluminum article 10 and flux residue 34 the bond between flux residue 34 and aluminum article 10 weakens. Once the bond is weakened flux residue 34 is more easily removed. The parameters of anodizing step 46 and characteristics of oxide layer 36 (*e.g.*, thickness) can affect how easily flux residue 34 is removed.

After some anodizing steps 46, flux residue 34 can be removed simply by rinsing aluminum article 10. Rinsing can be performed by immersion in water or flowing water over the outer surface of aluminum article 10. Immersion in water can be accompanied by agitation to speed up the removal of flux residue 34. In some situations, flux residue 34 is removed from aluminum article 10 by spraying water at the outer surface of aluminum article 10. The water can be sprayed at aluminum article 10 at various temperatures and pressures to remove flux residue 34. In cases where flux residue 34 resists removal during low pressure spraying, the water pressure can be increased. In other situations, hydrothermal treatment is used to remove flux residue 34. Suitable hydrothermal treatments for removing flux residue 34 are described in International Application No. PCT/US09/42552, filed May 1, 2009.

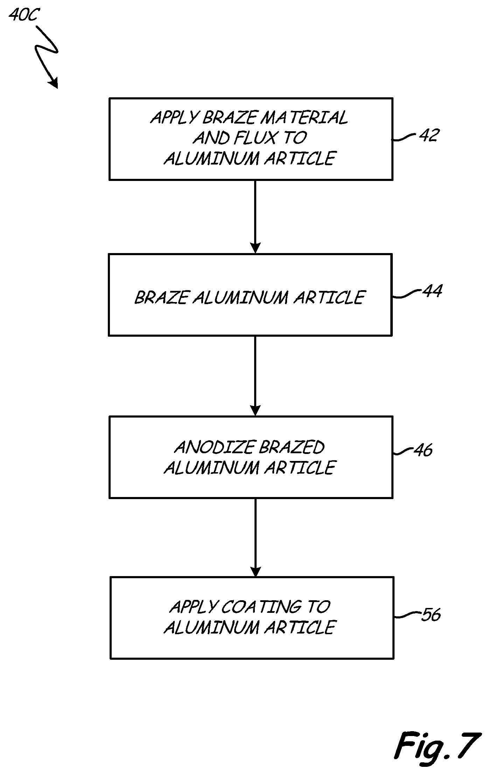

Method 40B also includes applying a coating to aluminum article 10 (step 56) following anodizing step 46. Coating step 56 can be performed following residual flux removal step 54 or immediately following rinsing step 52. FIG. 7 illustrates method 40C where coating step 56 is performed without an earlier flux removal step. Various coatings, including paints or protective coatings (*e.g.,* UV protectant), can be applied to aluminum article 10 once oxide layer 36 has formed on its outer surface. Whether coating step 56 is performed after flux removal step 54 or rinsing step 52, at least a portion of the coating applied directly contacts oxide layer 36. Coatings applied to aluminum article 10 typically offer wear and corrosion resistance to the outer surface of aluminum article 10. Oxide layer 36 allows the coating applied in step 56 to bond to the outer surface of aluminum article 10 with more adhesion and bond strength than if the coating was applied to the outer surface having flux residue 34 and no oxide layer 36.

The present invention provides a method for forming an oxide layer on a brazed aluminum article. The oxide layer forms between the outer surface of the aluminum article and residual flux material applied for the brazing process. By forming the oxide layer, the bond between the residual flux material and the outer surface of the aluminum article is weakened. The residual flux material can be removed from the aluminum article more easily. The oxide layer also enhances the bonding capability of paint and other coatings with the aluminum article.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A method comprising:
applying a brazing flux (32) to an outer surface of an aluminum article (10);
brazing the outer surface of the aluminum article (10);
anodizing the aluminum article (10) to form an oxide layer (36) on the outer surface of the aluminum article (10) by contacting a portion of the outer surface of the aluminum article (10) with an electrolyte solution, and applying an electric current through the electrolyte solution with the aluminum article (10) as anode to react aluminum on the outer surface of the aluminum article (10) to form aluminum oxide, wherein a portion of the oxide layer (36) is formed between a flux residue (34) produced by the brazing and the outer surface of the aluminum article (10); and
removing brazing flux (34) from the outer surface of the aluminum article (10) after forming the oxide layer (36).

2. The method of claim 1, wherein the electrolyte solution comprises an acid selected from the group consisting of sulfuric acid, oxalic acid, boric acid, phosphoric acid, chromic acid and combinations thereof.

3. The method of claim 1, wherein the electric current is pulsed direct current or alternating current.

4. The method of claim 1, wherein the electric current has a current density between about 100 amperes per square meter and about 300 amperes per square meter.

5. The method of claim 4, wherein the electric current forms an electric field having an average voltage less than about 175 volts.

6. The method of claim 1, further comprising:
applying a coating to the aluminum article (10), wherein a portion of the coating is applied over the oxide layer (36).

7. The method of claim 1, further comprising:
sealing the outer surface of the aluminum article (10).

8. The method of claim 1, wherein the electrolyte solution deposits silicate or phosphate compounds in the oxide layer (36) to form a ceramic oxide layer (36).

9. The method of claim 1, wherein the electrolyte solution contains a titanium oxide, and wherein the titanium oxide deposits metal ions to form the oxide layer (36).

## Patentansprüche

1. Verfahren, Folgendes umfassend:
Auftragen eines Lötflussmittels (32) auf einer Außenfläche eines Aluminiumartikels (10);
Löten der Außenfläche des Aluminiumartikels (10);
Anodisieren des Aluminiumartikels (10), um auf der Außenfläche des Aluminiumartikels eine Oxidschicht (36) zu formen, indem ein Abschnitt der Außenfläche des Aluminiumartikels (10) mit einer Elektrolytlösung in Kontakt gebracht wird, und Anlegen eines elektrischen Stroms durch die Elektrolytlösung mit dem Aluminiumartikel (10) als Anode, um Aluminium an der Außenfläche des Aluminiumartikels (10) umzusetzen, um Aluminiumoxid zu formen, wobei ein Abschnitt der Oxidschicht (36) zwischen einem Flussmittelrest (34), der durch das Löten erzeugt wurde, und der Außenfläche des Aluminiumartikels (10) geformt wird; und
Entfernen von Lötflussmittel (34) von der Außenfläche des Aluminiumartikels (10) nach dem Formen der Oxidschicht (36).

2. Verfahren nach Anspruch 1, wobei die Elektrolytlösung eine Säure umfasst, die ausgewählt ist aus der Gruppe bestehend aus Schwefelsäure, Oxalsäure, Borsäure, Phosphorsäure, Chromsäure und Kombinationen davon.

3. Verfahren nach Anspruch 1, wobei der elektrische Strom als Gleichstrom oder Wechselstrom gepulst ist.

4. Verfahren nach Anspruch 1, wobei der elektrische Strom eine Stromdichte zwischen ungefähr 100 Ampere pro Quadratmeter und ungefähr 300 Ampere pro Quadratmeter aufweist.

5. Verfahren nach Anspruch 4, wobei der elektrische Strom ein elektrisches Feld mit einer durchschnittlichen Spannung unter 175 Volt formt.

6. Verfahren nach Anspruch 1, weiter Folgendes umfassend:
Auftragen einer Beschichtung auf den Aluminiumartikel (10), wobei ein Abschnitt der Beschichtung über der Oxidschicht (36) aufgetragen wird.

7. Verfahren nach Anspruch 1, weiter umfassend:
Versiegeln der Außenfläche des Aluminiumartikels (10).

8. Verfahren nach Anspruch 1, wobei die Elektrolytlösung Silikat- oder Phosphatverbindungen in der Oxidschicht (36) ablagert, um eine keramische Oxidschicht (36) zu formen.

9. Verfahren nach Anspruch 1, wobei die Elektrolytlösung ein Titanoxid enthält und wobei das Titanoxid Metallionen ablagert, um die Oxidschicht (36) zu formen.

## Revendications

1. Procédé comprenant :
l'application d'un flux de brasage (32) sur une surface externe d'un article en aluminium (10) ;
le brasage de la surface externe de l'article en aluminium (10) ;
l'anodisation de l'article en aluminium (10) pour former une couche d'oxyde (36) sur la surface externe de l'article en aluminium (10) par le contact d'une partie de la surface externe de l'article en aluminium (10) avec une solution d'électrolyte, et l'application d'un courant électrique à travers la solution d'électrolyte avec l'article en aluminium (10) jouant le rôle d'anode pour faire réagir l'aluminium sur la surface externe de l'article en aluminium (10) afin de former de l'oxyde d'aluminium, dans lequel une partie de la couche d'oxyde (36) est formée entre un résidu de flux (34) produit par le brasage et la surface externe de l'article en aluminium (10) ; et
le retrait du flux de brasage (34) de la surface externe de l'article en aluminium (10) après la formation de la couche d'oxyde (36).

2. Procédé selon la revendication 1, dans lequel la solution d'électrolyte comprend un acide sélectionné dans le groupe constitué de l'acide sulfurique, de l'acide oxalique, de l'acide borique, de l'acide phosphorique, de l'acide chromique et de leurs combinaisons.

3. Procédé selon la revendication 1, dans lequel le courant électrique est un courant continu pulsé ou un courant alternatif pulsé.

4. Procédé selon la revendication 1, dans lequel le courant électrique présente une densité de courant située entre environ 100 ampères par mètre carré et environ 300 ampères par mètre carré.

5. Procédé selon la revendication 4, dans lequel le courant électrique forme un champ électrique présentant une tension moyenne inférieure à environ 175 volts.

6. Procédé selon la revendication 1, comprenant en outre : l'application d'un revêtement sur l'article en aluminium (10), dans lequel une partie du revêtement est appliquée sur la couche d'oxyde (36).

7. Procédé selon la revendication 1, comprenant en outre : le scellage de la surface externe de l'article en aluminium (10).

8. Procédé selon la revendication 1, dans lequel la solution d'électrolyte dépose des composés de silicate ou de phosphate dans la couche d'oxyde (36) pour former une couche d'oxyde céramique (36).

9. Procédé selon la revendication 1, dans lequel la solution d'électrolyte contient un oxyde de titane, et dans lequel l'oxyde de titane dépose des ions métalliques pour former la couche d'oxyde (36).
